# EUROPEAN PATENT SPECIFICATION

(11) **EP 4 501 569 B1**
(45) Date of publication and mention of the grant of the patent: **19.11.2025**
(21) Application number: 23188641.7
(22) Date of filing: 31.07.2023
(51) Int. Cl.: B28D 1/22, B32B 17/06, G02B 17/00, G02B 27/00, G02B 27/01, G02B 27/62, G01B 11/27

(54) **METHOD AND APPARATUS FOR SLICING A MULTILAYERED GLASS ELEMENT**
VERFAHREN UND VORRICHTUNG ZUM SCHNEIDEN EINES MEHRSCHICHTIGEN GLASELEMENTS
PROCÉDÉ ET DISPOSITIF POUR COUPER EN TRANCHES UN ÉLÉMENT EN VERRE MULTICOUCHE

(43) Date of publication of application: 05.02.2025
(60) Divisional application: 25194360.1
(73) Proprietor: Lumus Ltd., 7403631 Ness Ziona (IL)
(72) Inventor: LEYS, Antoine, 55122 Mainz (DE); CH´NG, Yong Hong, 13600 Perai/Penang (MY); CHIA, Weng Loon, 13600 Perai/Penang (MY); NG, Chee Horng, 13600 Perai/Penang (MY); FRIEDMANN, Edgar, Ness Ziona, 7403631 (IL); SHAPIRA, Amir, Ness Ziona, 7403631 (IL)
(74) Representative: Becker Kurig & Partner Patentanwälte mbB

(56) References cited:
- WO-A1-2015/087844
- US-A1- 2004 168 682

## Description

The invention generally concerns the technical field of manufacturing glass based optical elements. In particular, the invention relates to precision cutting of glass slices to obtain optical components.

For some applications, optical components having a complex structure are required. Such a complex optical component may comprise a multitude of stacked glass layers with intermediate functional optical layers, e.g. light reflecting and/or polarizing layers. WO 2015/087844 A1 discloses a glass layered body fabrication method wherein a plurality of glass films with reflective films are layered into a single body by means of an adhesive to obtain a glass layered body. These components may also be used as waveguide elements, for example to provide a near eye display. For this application, the structuring of the optical element serves to expand a small image to a large field of view. The optical element may then be worn as a transparent screen or eyeglass lens which displays images from a small side mounted screen that are superimposed to the image of the environment as seen through the lens. To properly guide and superimpose the projected and superimposed image with the environmental image as seen by a wearer of such a near eye display, the layers of the stack should be positioned and oriented with high accuracy with respect to its surfaces or interfaces. A method of fabrication of these optical elements which are also referred to as light-guide optical elements is described in WO 2021/240515 A1. In general, the method is based on stacking and bonding a plurality of coated transparent plates together to form an optical block and then slicing the block in predetermined intervals to form a plurality of light-guide optical elements. A method for slicing a body based on the orientation of a reference plane being a crystallographic (100) plane is disclosed in US 2004/0168682 Al. As the layers within the stack should be precisely oriented, however, the separation of light guide optical elements from the block is of particular importance since the orientation and position of the separation planes with respect to the block define the orientation of the layers within the separated element. WO2015087844A1 also discloses a method of forming a layered glass body. It is therefore an object of the invention to improve the precision of the separation of slices from a multilayered block. This object is solved by the subject matter of the independent claims. Advantageous refinements of the invention are defined in the respective dependent claims.

Accordingly, a method and a device for fabricating blanks for light-guide optical elements from a compound glass stack is provided, wherein the compound glass stack comprises a multitude of glass plates bonded together, with light reflecting layers being arranged between the glass plates. The method comprises cutting slices from the compound glass stack along parallel cutting planes. The method further comprises aligning the compound glass stack to the cutting planes so that the light reflecting layers have a defined orientation with respect to the side faces of the slices after cutting. Advantageously, aligning is performed prior to cutting. The compound glass stack has a plane having a defined orientation with respect to the light reflecting layers within the compound glass stack, so that the light reflecting layers within the slices are correctly oriented when the cutting planes run parallel to the plane of the compound glass stack. The alignment of the compound glass stack to the cutting planes comprises
- adjusting the tilt angles of the plane of the compound glass stack with respect to the cutting planes using an autocollimator, and
- adjusting the position of the compound glass stack in a direction obliquely, preferably perpendicular to the cutting planes.

The compound glass stack is held fixed to a holder in its aligned orientation and then cut into slices. These slices are forming blanks for light-guide optical elements. Depending on the structure of the blanks, these blanks may be directly processed to the light-guide optical elements or may be bonded to other slices. In the latter case, the blanks are intermediate products for producing the light-guide optical elements. For example, a further compound glass stack may be produced using the slices. This glass stack can then be sliced again using the method as described herein to fabricate blanks for the light-guide optical elements to be produced.

Preferably, the slices are cut from the compound glass stack using a wire saw with a multitude of parallel sections of one or more cutting wires. In this case, the cutting planes are spanned by the longitudinal direction of the wires and the direction of advancement along which the compound glass stack is moved relative to the wires.

A light reflecting layer as described herein may in particular be a layer that is semi-reflective, i.e. reflects a ratio of the incident light depending on the parameters of the light rays such as angle of inclination, polarization or wavelength.

The invention is described in the following in more detail with respect to the accompanying figures.

### Short description of the figures

- Fig. 1: shows a perspective view of a compound glass stack.
- Fig. 2: shows a frontal view of the compound glass stack.
- Fig. 3: shows a slice cut from the compound glass stack shown in Fig. 2.
- Fig. 4: shows a device for slicing a compound glass stack with a device for alignment of the compound glass stack to the cutting planes.
- Fig. 5: shows an illustration of various misalignments of a light reflecting layer in comparison to a correctly aligned light reflecting layer.
- Fig. 6: shows two sketches of the display of an autocollimator before and after alignment of the compound glass stack.
- Fig. 7: shows a sketch of the display of a camera for adjusting the lateral position of the compound glass stack.
- Fig. 8: shows a test compound glass stack.
- Fig. 9: shows an arrangement for offline-measurement of tilt angles.
- Fig. 10: illustrates steps for rough adjustment of a tilt angle.
- Fig. 11: shows a rough adjustment of an azimuthal tilt angle.
- Fig. 12: shows an alignment device.

### Detailed description of embodiments

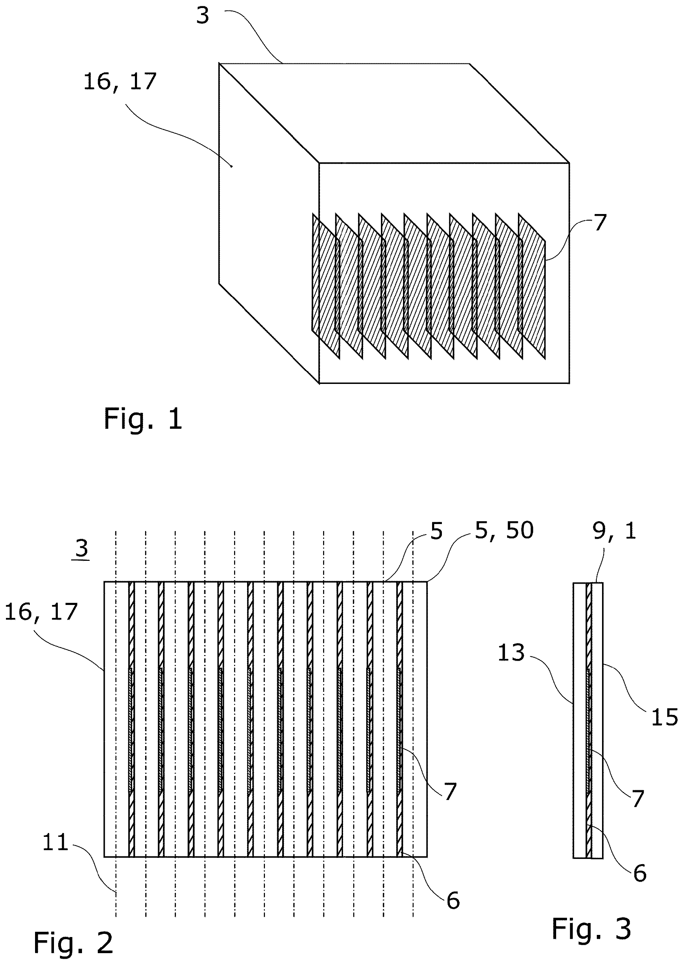

Figs. 1 and 2 show a compound glass stack in a perspective view and a frontal view onto one of its side faces. According to one embodiment, a compound glass stack 3 comprises a multitude of light reflecting layers 7 oriented parallel to a side face 17 of the compound glass stack 3, as shown in the perspective view of Fig. 1. Generally, without restriction to the embodiment as shown, the light reflecting layers 7 are spaced from each other in regular intervals along their normal direction, or perpendicular to their surfaces. As shown in Fig. 2, the compound glass stack 3 comprises a multitude of comprising a multitude of glass plates 5 bonded together by bond layers 6. These bond layers 6 may be optical cement layers or adhesive layers. Generally, a bond layer 6 may preferably have a thickness in the range from 0,5 µm to 6 µm, more preferably in an range from 0,75 µm to 5 µm, also preferably from 1 µm to 4 µm, particularly in a range from 1 µm to 3 µm.

The light reflecting layers 7 are arranged between the glass plates 5. These light reflecting layers 7 are preferably produced by depositing the layer material onto one face of a glass plate 5. Fig. 2 also shows the intended cutting planes 11 as hatched lines. The distance of the cutting planes 11 is preferably chosen to match the distance of the light reflecting layers 7 so that in the slices produced by cutting along the cutting planes 11 the light reflecting layers 7 are arranged equally with respect to their distance to the side faces of the slices. In a preferred embodiment, the compound glass stack 3 is cut so that the light reflecting layers 7 in the slices are arranged centered between the side faces of the slices. Accordingly, without restriction to the specific embodiment as shown, the compound glass stack 3 comprises a multitude of light reflecting layers 7 oriented parallel to the side face 17 of the compound glass stack 3, wherein the step of adjusting the position of the compound glass stack 3 in a direction perpendicular to the cutting planes 11 comprises adjusting the position of the compound glass stack 3 so that the light reflecting layers 7 are centered within the slices 9 in a direction perpendicular to the side faces of the slices. A light optical element having a centered light reflecting layer which serves as a mixing layer is, e.g., known from US 2022/0091413 A1.

In the example as shown, the glass plates 5 have equal thickness. However, in a preferred embodiment, the outer glass plates 50 forming side faces 17 of the compound glass stack 3 may have a thickness different from the glass plates 5 sandwiched between these outer glass plates 50. It is further preferred that the outer glass plates 50 forming side faces 17 are thicker than the inner glass plates 5 sandwiched between the outer glass plates 5, 50. In an example, the thickness of the outer plates 50 is 5 mm and the thickness of the inner glass plates 5 is 1.55 mm. Generally, without restriction to specific examples, the inner glass plates 5 may have a thickness in the range from 1 mm to 3 mm. Further, without restriction to specific examples, the compound glass stack 3 may have at least 10, preferably 10 to 60, more preferably 20 to 50 inner glass plates 5 sandwiched between outer plates 50. Thus, according to a refinement of the method, at least 9, preferably 9 to 59, more preferably 19 to 49 slices forming blanks for light-guide optical elements may be cut from a compound glass stack 3.

In an example, the glass plates 5 are made from N-BK7 glass. The compound glass stack has a dimension of 70x70x70 mm³, with a dimension tolerance of +/-0,3 mm. The side faces 17 formed by the side faces of the outer glass plates 50 may be D151 ground surfaces or finer, in particular, the side faces may be polished. The top and bottom side faces may have a somewhat lower surface quality, e.g. may be surfaces ground. The edges may be chamfered to max. 0.5 mm.

Fig. 3 shows a slice 9 cut from the compound glass stack as shown in Figs. 1, 2. The slice 9 has side faces 13, 15 formed by cutting the compound glass stack 3 along the cutting planes 11. As explained above, preferably, the light reflecting layer 7 is centered between the side faces 13, 15.

According to one embodiment, the slice 9 may form a light-guide optical element 1, e.g. after cutting the slice 9 along a predefined contour and/or after finishing the side faces 13, 15. Thus, according to one embodiment, a method of producing a light-guide optical element 1 is provided, comprising producing a slice 9 from a compound glass stack 3 using the method as described herein, polishing the side faces 13, 15 of the slice 9 and cutting the slice 9 along a predefined contour line to obtain the light-guide optical element 1. In another embodiment, the slices 9 are intermediate products for light-guide optical elements 1, wherein the slices 9 are again stacked together with other, typically differently structures slices to form another compound glass stack which then may again sliced using the method according to this disclosure.

Independent therefrom, in a preferred embodiment, the position of the compound glass stack 3 with respect to the cutting planes 11 is adjusted so that deviation of the position of a light reflecting layer 7 with respect to a reference position within a slice 9 cut from the compound glass stack 3 is less than 0.2 mm, preferably less than 0.1 mm. As explained, the reference position preferably is the center position of the slice 9 between its side faces 13, 15. Accordingly, if the light reflecting layer 7 is positioned in the center of the slice, the magnitude of the difference of the distances of the light reflecting layer 7 to the side faces 13, 15 of the slices is less than 0.2 mm, or even less than 0.18 mm after slicing and polishing.

The centered position of a light reflecting layer 7 within a slice is only one of several parameters for a correct orientation. Of particular importance are tilts of a light reflecting layer 7 with respect to a reference plane. Such a reference plane will in particular be one of the side faces 13, 15 of the slice 9. According to a preferred embodiment, the orientation of the compound glass stack 3 with respect to the cutting planes 11 is adjusted with the help of the autocollimator, so that a tilt angle of the light reflecting layer 7 of a slice 9 cut from the compound glass stack 3 is less than 15 arc seconds, or less than 0.004166 degrees, respectively.

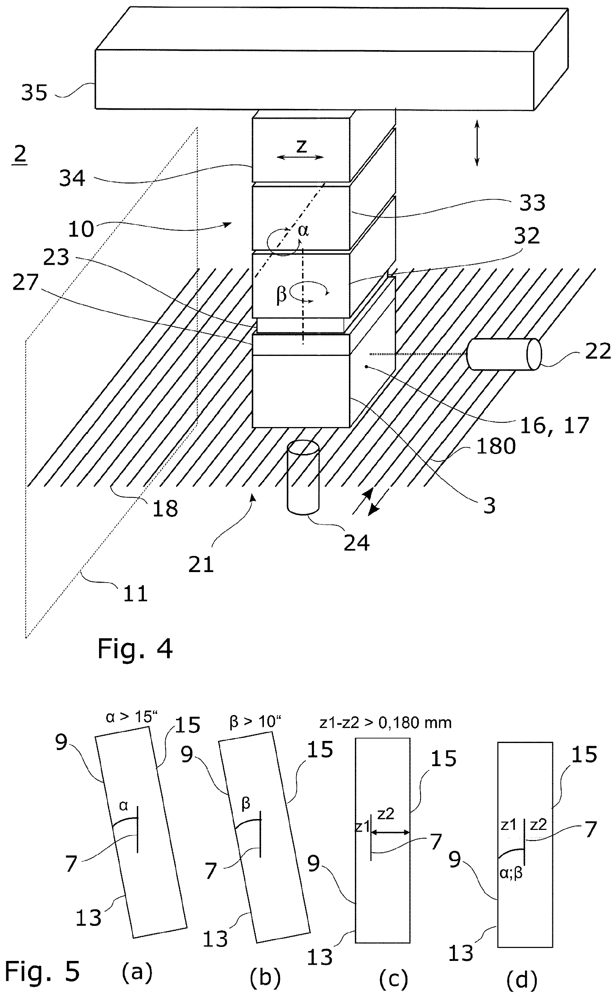

In the following, the adjustment and slicing are explained in more detail. Fig. 4 shows a schematic of a cutting device 2 for cutting slices from the compound glass stack 3. The cutting device 2 comprises a wire saw 21 with a multitude of parallel sections 180 of one or more cutting wires 18. For example, a single cutting wire 18 may be guided in a meandering manner around an arrangement of spaced bearings. This way, adjacent parallel sections 180 of the wire 18 advance in opposite directions, as illustrated by two arrows in Fig. 4.

The compound glass stack 3 is held by a holder 23 an cut by moving the compound glass stack 3 relative to the wires 18.

The alignment of the compound glass stack 3 is performed with an alignment device 10. As exemplary in this embodiment, the alignment device 10 comprises three stacked stages 32, 33, 34, preferably microstages, wherein two stages 32, 33 adjust tilt angles α, β in non-parallel, in particular perpendicular planes. As can be seen from Fig. 4, the tilt angle β is the azimuthal angle of rotation about an axis along the cutting direction. A further stage 34 is set up for linear displacement in a direction oblique to the cutting planes 11, preferably in a direction perpendicular to the cutting planes 11. One cutting plane 11 of one of the parallel sections 180 is illustrated by a hatched line. Thus, generally and without restriction to the specific example as shown, the alignment device 10 comprises stacked stages 32, 33, 34, wherein
- one of the stages 32 is set up to adjust or manipulate the azimuthal angle of rotation of the compound glass stack 3 about an axis along the cutting direction,
- one of the stages 33 is set up to adjust or manipulate an angle of rotation of the compound glass stack 3 about an axis obliquely (preferably perpendicular) to the cutting planes 11 and
- one of the stages 34 is set up to adjust or manipulate the position of the compound glass stack 3 in a direction obliquely (preferably perpendicular) to the cutting planes 11.

The method of fabricating blanks according to this embodiment thus comprises fixing the compound glass stack 3 on a holder 23 movable by stacked stages 32, 33, 34, and
- adjusting or manipulating the azimuthal angle of rotation of the compound glass stack 3 about an axis along the cutting direction using one of the stages 32,
- adjusting or manipulating an angle of rotation of the compound glass stack 3 about an axis obliquely (preferably perpendicular) to the cutting planes 11 using one of the stages 33 and
- adjusting or manipulating the position of the compound glass stack 3 in a direction obliquely (preferably perpendicular) to the cutting planes 11 with one of the stages 34. In difference to the depicted embodiment, a stage may be set up for a combined adjustment of two parameters, e.g. for adjusting both tilt angles α, β. In this case, only two stages are needed.

The cutting of the compound glass stack 3 into slices forming blanks for light-guide optical elements is preferably carried out by moving the holder 23 with the affixed compound glass stack 3 with respect to the cutting wire or wires 18 using a macrostage or advancement device 35. Preferably, the cutting is performed by moving the holder 23 with the affixed compound glass stack 3 downwards.

In a preferred embodiment, as also shown in the example of Fig. 4, the compound glass stack 3 is bonded to a sacrificial substrate or plate 27 which is held fixed on the holder. The cutting process then comprises completely cutting through the compound glass stack 3 and further partly into the sacrificial plate 27. After cutting, the bond between the sacrificial plate 27 and the compound glass stack 3 is released, or de-cemented, respectively so that the slices 9 separate from the sacrificial plate 27. Preferably, for this purpose the compound glass stack is bonded to the sacrificial plate 27 by a releasable cement, in particular a UV releasable or thermally releasable cement.

In one embodiment, which is also realized in the example of Fig. 4, the autocollimator 22 is arranged in fixed relationship to the cutting device 2, in particular to wire saw 21. This way, the tilt of the compound glass stack 3 can be aligned inline within the cutting device.

Further, generally, the step of adjusting the position of the compound glass stack 3 so that the light reflecting layers 7 are centered within the slices 9 in a direction perpendicular to the side faces 13, 15 preferably comprises monitoring the position of at least one light reflecting layer 7 by means of a camera 24. In one embodiment, as also shown in the example of Fig. 4, the camera 24 is also arranged in fixed relationship to the cutting device 2, in particular to the wire saw 21 so that the position of the compound glass stack 3, in particular using stage 34 can be adjusted inline. In the exemplary embodiment, the camera 24 is arranged in a direction along the advancement direction of the compound glass stack 3. However, the camera 24 could also be placed in a position viewing along the longitudinal direction of the parallel sections 180 of the one or more cutting wires 18. The adjustment of the position of the compound glass stack 3 in the direction obliquely, preferably perpendicular to the cutting planes 11 controlled by the images taken with camera 24 has been proven to be so accurate that the absolute value of the difference of the distances of the light reflecting layer 7 to the side faces 13, 15 of a slice 9 is less than 0.18 mm after slicing and polishing. This feature is also achievable with the other embodiments as disclosed herein. Preferably, as also shown in the example of Fig. 4, the camera 24 is arranged to image at least one of the light reflecting layers 7 edgewise. This enables a precise positioning of the compound glass stack 3.

To adjust a tilt, or, respectively, tilt angles α, β, the autocollimator 22 may monitor the tilt of one of the inner surfaces of the compound glass stack 3, such as the tilt of one of the light reflecting layers 7. In this case, the autocollimator advantageously is set up to monitor the tilt angles of the light reflecting layer 7 closest to the autocollimator 22. In another embodiment, which is also realized in the example of Fig. 4, the plane 16 of the compound glass stack 3 having a defined orientation with respect to the light reflecting layers 7 is a side face 17 of the compound glass stack 3. It is advantageous for this embodiment, i.e. generally, an adjustment of the orientation of a side face of the compound glass stack 3, if at least the side face 17 monitored by the autocollimator 22 has a polished surface quality. For example, the side face 17 may be a polished surface.

Fig. 5 illustrates various misalignments of a light reflecting layer 7 within a slice 9 caused by improper alignment of the compound glass stack 3 before slicing. In case (a), the tilt angle α is larger than 15 arc seconds. In case (b), the tilt angle β exceeds 10 arc seconds. Sketch (c) illustrates a misalignment, where the magnitude of the difference z1-z2 of the distances of layer 7 to the side faces 13, 15 exceeds 0.18 mm. Of course, more than one of these misalignments may be present in a deficient slice 9. Case (d) shows a proper alignment, where all limits shown in partial image (a) to (c) are met. Further, after polishing the slice 9, the tolerance of the thickness of the slice 9 can be limited to 0.05 mm at most, e.g. for a slice having a thickness of 1.2 mm.

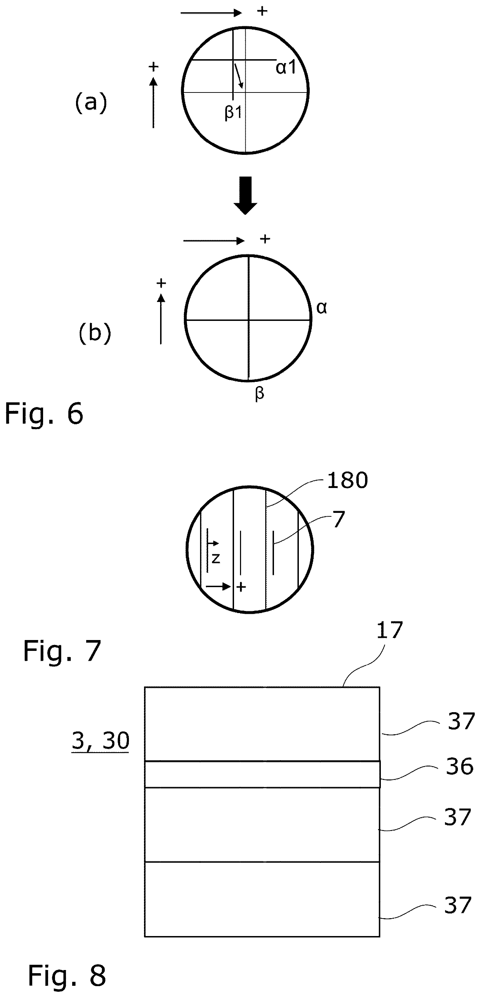

Fig. 6 shows two sketches (a) and (b) of the display of an autocollimator 22. Sketch (a) shows the display of the autocollimator 22 before alignment of the compound glass stack 3. The tilt angles α1, β1 appear as lines that are perpendicular to each other and are offset to the center of the display due to a misalignment. The center may be marked by a crossline as shown. The autocollimator is also aligned to the cutting planes 11 so that by adjusting the tilt angles of the plane 16 of the compound glass stack 3 with respect to the cutting planes 11 using the autocollimator 22 comprises adjusting the orientation of the compound glass stack 3 so that the lines representing the tilt angles α, β are centered, or are crossing in the center of the display, thereby also matching with the crossline. This state is shown in sketch (b) of Fig. 6.

Fig. 7 further shows a sketch of the display of camera 24 as shown in Fig. 4, for adjusting the lateral position of the compound glass stack. The camera 24 is imaging the light reflecting layers 7 edgewise and through the arrangement of parallel sections 180 of the one or more cutting wires. To adjust the position of the compound glass stack 3 in a direction obliquely, preferably perpendicular to the cutting planes 11, which in the embodiment as discussed here is a position, where the light reflecting layer 7 is centered in the slice 9, the position of the compound glass stack 3 is adjusted so that the light reflecting layers 7 appear centered between the sections 180 in the image. In the example shown, the position of the compound glass stack 3 needs to be adjusted so that the light reflecting layers 7 move somewhat to the right in the image as depicted.

To achieve a proper orientation of the compound glass stack 3 with respect to the cutting planes 11, advantageously, the orientation of the autocollimator 22 with respect to the holder 23 is also aligned and/or corrected according to a preferred refinement. According to this refinement, an adjustment of the orientation of the autocollimator 22 with respect to the cutting planes 11 is performed, the method comprising adjusting the tilt angles of the plane 16 of a test compound glass stack 30 with respect to the cutting planes 11 using the autocollimator 22, cutting the compound glass stack 30 into slices 9, placing one of the slices, preferably one of the outermost slices 9, in particular the slice 9 with the face of the compound glass stack 30 facing the autocollimator, with one of its side faces 13, 15 onto a reference surface 25, measuring the tilt angles of the plane 16, preferably measuring the tilt angles of the side face 15, 13 opposite to the side face 13, 15 that is placed on the reference surface 25 and correcting the orientation of the autocollimator 22 with respect to the cutting planes 11. Similarly, the position and orientation of the camera 24 may be corrected.

For the purpose of the initial adjustment, it is not necessary to use a fully equipped compound glass stack 3 having a multitude of light reflecting layers 7. Rather, a dummy or test compound glass stack may be used. An example of such a test compound glass stack 30 is shown in Fig. 8. For the adjustment of the setup of the autocollimator 22 and/or the camera 24, a single plate having a light reflecting layer 7 may be sufficient. In the example of Fig. 8, the test compound glass stack 30 comprises three dummy glass plates 37 and one mixer glass plate 36 sandwiched between two of the stacked dummy glass plates 37. The mixer glass plate 36 may have a light reflecting layer (not shown) for the purpose of the alignment. In one example, the dummy glass plates 37 have a thickness (i.e. the distance between the side faces 13, 15) of about 20 mm and the mixer glass plate has a thickness of about 6mm.

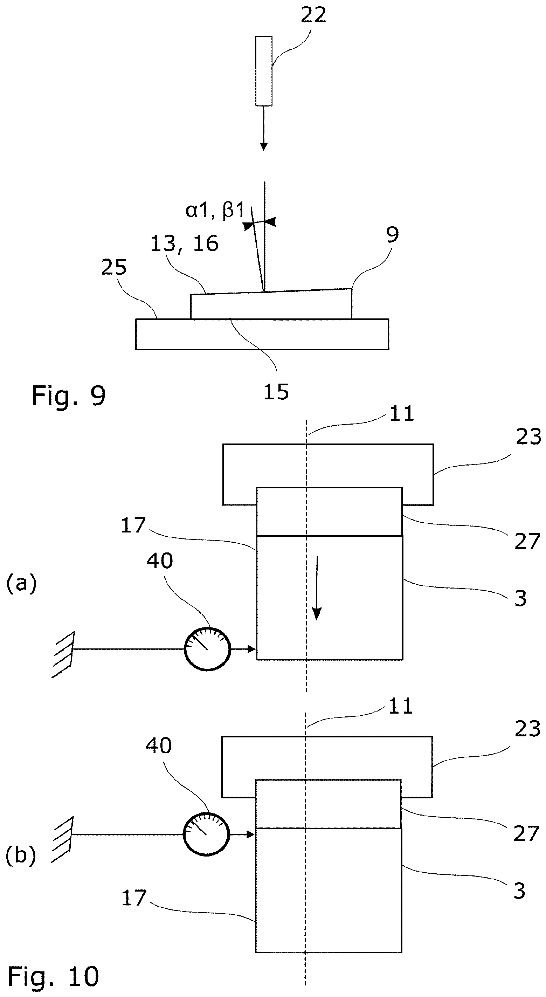

Fig. 9 shows an arrangement to determine the adjustment of the autocollimator 22. After the compound glass stack 3, or, preferably a test compound glass stack 30 is cut into slices 9, one of the slices 9 is placed on a reference surface 25, e.g. of a support 26. The support 26 may for example be a granite plate. Then, the tilt angles α1, β1 of the side face 13 opposite to the side face 15 lying on the reference surface 25 are measured. For this purpose, one of the outermost cut slices 9 is used so that the side face 17 of the compound glass stack 3 forms the side face 13 of the slice 9. This is advantageous since this side face may already have a polished surface quality whereas the other side faces may have a higher roughness due to the cutting process. Thus, the side 13 forms the plane 16 for which the tilt with respect to the cutting planes 11 is measured. Alternatively, one of the inner slices 9 may be used and the tilt angles in this case may be determined from the tilt angle of a light reflecting layer 7 inside the slice. Preferably, the tilt angles are again determined with an autocollimator 22. This autocollimator 22 may be taken from the cutting device 2 and mounted to the arrangement of Fig. 9, or alternatively, an additional autocollimator may be used. In any case, the orientation of the autocollimator with respect to the reference surface 25 is calibrated so that the measured tilt angles α1, β1 can be used to correct the adjustment of the autocollimator 22 of the alignment device 10. Thus, the correction of the autocollimator position and orientation is determined in an off-line measurement. Typically, the outer slice 9 as used for the tilt angle measurement differs from inner slices 9. After processing a regular compound glass stack 3, typically only the inner slices have a structuring as, e.g., shown in Fig. 3 and the outer slices 9 are therefore not usable as blanks for light-guide optical elements 1. This is obvious, e.g. from Fig. 2, since the outer slices do not contain a light reflecting layer 7.

Generally, the tilt angles may also be controlled in the regular operation of the cutting device 2 at least once between the processing of two compound glass stacks 3, i.e. between the cutting steps of two stacks. Specifically, after cutting of a compound glass stack 3, the tilt of the orientation of the slices 9 may be determined offline as described above, i.e. by placing the slices 9 onto a reference surface 25. Advantageously, the tilt angles of a multitude of slices 9 may be measured and mean tilt angles are determined therefrom to enhance accuracy. The inner slices 9 generally have parallel side faces 13, 15 in difference to an outer slice 9 in case of misalignment, as shown in Fig. 9. In this case therefore, a tilt of an inner surface, in particular a tilt of a light reflective layer 7 is used for the measurement. Accordingly, in a refinement the method comprises cutting a first compound glass stack 3 to form slices 9 and subsequently cutting a second compound glass stack 3, wherein a multitude of the slices 9 cut from the first compound glass stack are placed onto a reference surface 25 with one of its side faces 13, 15, and the tilt angles of an inner surface of the slides 9, in particular of a light reflecting layer 7 with respect to the reference surface 25 are measured and average tilt angles are determined, and wherein the orientation of the autocollimator 22 is corrected based on the average tilt angles and the second compound glass stack 3 is cut with its tilt angles with respect to the cutting planes 11 being adjusted using the autocollimator 22 in its corrected orientation. These steps may in particular be performed in addition to the orientation using a test compound glass stack 30.

This embodiment may of course be combined with the measurement of tilt angles of an outer slice, in particular of the tilt angles of one of the side faces 13, 15, as shown in Fig. 9. Thus, a preferred process flow is as follows:
1. Rough set-up of β with a dial gauge or precitec sensor (measurement on polished glass),
2. Rough set-up of α with at least one camera 24 (align wire sections 180 to be parallel to top surface of compound glass stack 3),
3. Alignment of the autocollimator 22: copy vertical and horizontal line on autocollimator,
4. Slicing of the test compound glass stack 30,
5. Off-line measurement of tilt angles α1 and β1 of the first or outer slice 9 of the test compound glass stack 30 as explained with reference to Fig. 9.
6. Mounting of a compound glass stack 3 on the holder 23 and adjusting tilt angles α and β on the stages 32, 33,
7. Correction of the autocollimator orientation using tilt angles α1 and β1 determined by off-line measurement as explained with respect to Fig. 9,
8. Fine adjustment of tilt angles α and β with stages 32, 33,
9. Fine adjustment of z using stage 34.
10. Slicing the compound glass stack 3,
11. Off-line measurement of α and β of all slices and determination of mean values α̅ and β̅ of the tilt angles,
12. Mounting of the next compound glass stack 3 and adjusting α and β on the stages 32, 33
13. Correction of the autocollimator orientation using mean tilt angles α̅ and β̅ as determined by the off-line measurements using the arrangement of Fig. 9,
14. Fine adjustment of α and β on stages 32, 33,
15. Fine adjustment of z on stage 34
16. Slicing the compound glass stack 3.

The rough set up of the first compound glass stack 3 to be sliced (i.e. step 1 according to the above process flow), which in particular may be a test compound glass stack 30 is explained with respect to Fig. 10. In Fig. 10 the holder 23 holding the sacrificial plate 27 onto which the compound glass stack 3 is adhered is shown merely schematic. The rough or pre-adjustment of a tilt angle about an axis of rotation obliquely to the direction of movement for cutting the compound glass stack 3 is performed by measuring positions of a point on a face of the compound glass stack 3 along a path in the direction of movement of the compound glass stack 3 during the cutting operation and adjusting the orientation of the compound glass stack 3 based on the measurement, in particular, adjusting the orientation so that the positions have equal values in direction perpendicular to the face. This direction of course is parallel to the cutting planes 11. Sketch (a) of Fig. 10 shows the compound glass stack 3 in a first position and sketch (b) in a second position offset to the first position along the path, or, along the direction of movement. The direction of movement is indicated by an arrow in sketch (a). The position in the shown embodiment is measured using a gauge 40. If the tilt angle is zero, the position values of the gauge are equal for both positions. Preferably, the measurement is carried out on a side face 17 extending parallel to the cutting planes 11. Instead of a gauge or additionally thereto, another position or distance sensitive sensor, such as an optical or capacitive sensor may be used.

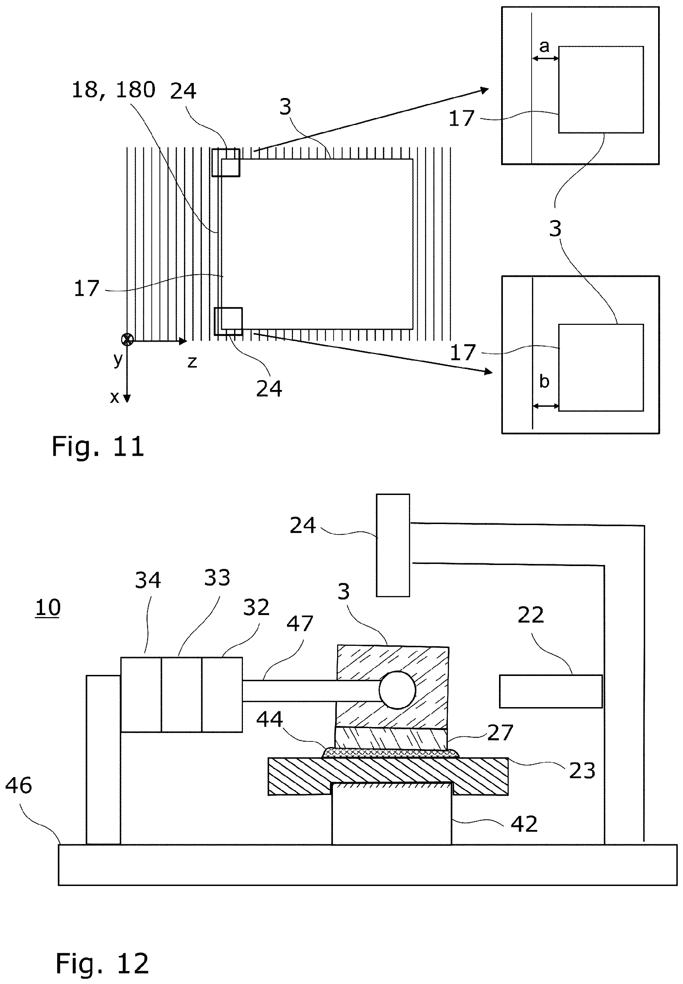

Fig. 11 shows another step of pre-adjustment, corresponding to step 2 of the process flow as given above. This pre-adjustment adjusts the azimuthal tilt angle having an axis of rotation along the movement direction for cutting. As can be seen in Fig. 11, the distance of a face 17 to the cutting wire 18, or its section 180, respectively is measured using at least one camera 24 for at least two points on the face 17 that are being spaced apart along the longitudinal direction of the wire 18. Advantageously, points close to the edges of the face 17 are chosen to minimize measuring errors. The orientation of the compound glass stack 3 is then adjusted so that the distances a, b are equal or, more generally, so that their difference is minimized. In the example, two cameras 24 are used. Alternatively, the compound glass stack 3 may be moved in a direction parallel to the cutting wire 18 and the distances recorded in sequence. Or, a single camera is used having a sufficiently large field of view so that the spaced apart points are within the field of view. It is obvious from Fig. 11 that the distance is measured only in one direction perpendicular to the face.

In the embodiment as exemplary shown in Fig. 4, the alignment device including stages 32, 33, 34, autocollimator 22 and camera 24 is arranged in the cutting device 2 or, respectively, forms a part of the cutting device 2. According to another embodiment, the alignment of the compound glass stack 3 is performed outside of the cutting device 2. This can be advantageous to avoid that components of the alignment device are affected by dust generated during the cutting device. The examples described in the following are based on an embodiment, where the holder 23 has a defined orientation with respect to the cutting planes 11 when the holder 23 is inserted and fixed in the cutting device 2, and wherein the compound glass stack 3 is aligned to the holder 23, while the holder 23 is detached from the cutting device 2 and fixed to the alignment device 10, wherein the compound glass stack 3 is aligned to the holder 23, monitored using the autocollimator 22 and fixed to the holder 23 in aligned orientation, and wherein the holder 23 with the attached compound glass stack 3 is inserted and fastened to the cutting device 2 so that the compound glass stack 3 has a defined orientation with the cutting planes due to its defined orientation to the holder 23. Then, the cutting operation can commence and the slices 9 are cut with high precision. An alignment device 10 suited for this embodiment is shown in Fig. 12. For example, the alignment device 10 may comprise a base plate, onto which the tools for the alignment are mounted. These tools include a mount 47 for adjusting position and orientation of the compound glass stack 3 and an autocollimator 22. Preferably, also, a camera 24 is mounted on the alignment device 10 for monitoring the lateral position of the compound glass stack 3 with respect to the cutting planes 11. As in the embodiment of Fig. 4, a side face 17 of the compound glass stack 3 may be used as the plane 16 having a defined orientation with respect to the cutting planes 11 of the cutting device 2.

The holder 23 for the compound glass stack 3 is mounted on a fixation 42. If the position and orientation of the autocollimator 22 and the camera 24 are suitably calibrated, the autocollimator 22 and the camera 24 have a defined alignment to the fixed holder 23 and thus, as for the cutting operation the holder 23 will be fixed within the cutting device 2, also have a defined alignment with respect to the cutting planes 11. To fix the compound glass stack 3 onto the holder 23 in aligned position and orientation, the compound glass stack 3 is moved and/or rotated using the mount 47, while the tilt angles and lateral position of the compound glass stack 3 are monitored using autocollimator 22 and camera 24. In the embodiment as shown, the mount 47 is moved using stages 32, 33, 34, similarly to the embodiment of Fig. 4. However, other adjusting means may be used alternatively or additionally. For example, the mount may be operated with a manually driven gimbal, preferably, using micrometer screws.

When the alignment is achieved, the compound glass stack 3 is fixed to the holder 23. To fasten the compound glass stack 3 to the holder 23, preferably, a cement 44 is used. For example, the alignment procedure may be carried out during the setting of the cement 44, while the cement 44 is still soft.

As in the embodiment of Fig. 4, the compound glass stack 3 is preferably not directly fixed to the holder 23, but fixed to a sacrificial plate 27 which in turn is fixed to the holder 23.

The embodiment according to Fig. 12 relies in particular to a calibration of alignment device 10. Thus, the embodiments as described with respect to Fig. 9 to Fig. 11, including both the calibration using one of the outer slices as shown in Fig. 9, as well as the determination of average tilt angles of a multitude of cut slices 9 and appropriate correction of the orientation of the autocollimator also may be used in the embodiment with the offline alignment according to Fig. 12. However, an additional arrangement for offline measurement of tilt angles as shown in Fig. 9 may be omitted. Instead, the correction may also be carried out using the alignment device 10 as shown in Fig. 12.

This disclosure also concerns a device for carrying out the method as described herein. The device accordingly comprises a cutting device 2 and an alignment device 10. The alignment device 10 may be part of the cutting device 2 as in the embodiment of Fig. 4, or may be a separate device as explained with respect to Fig. 12.

Accordingly, without restriction to specific examples described herein, the device for fabricating blanks for light-guide optical elements 1 from a compound glass stack 3 comprising a multitude of glass plates 5 bonded together, with light reflecting layers 7 being arranged between the glass plates 5, wherein the device comprises a cutting device 2 for cutting slices 9 from the compound glass stack 3 along parallel cutting planes 11, and an alignment device 10 for aligning the compound glass stack 3 to the cutting planes 11 so that the light reflecting layers 7 have a defined orientation with respect to the side faces 13, 15 of the slices 9 after cutting, wherein the compound glass stack 3 has a plane 16 having a defined orientation with respect to the light reflecting layers 7 within the compound glass stack 3, so that the light reflecting layers 7 within the slices 9 are correctly oriented when the cutting planes 11 run parallel to the plane 16 of the compound glass stack 3, wherein the device comprises a holder 23 for holding the compound glass stack 3 in its aligned orientation, and wherein the alignment device 10 comprises
- an autocollimator 22 for monitoring adjustment of the tilt angles of the plane 16 of the compound glass stack 3 with respect to the cutting planes 11, and
- means for adjusting the position of the compound glass stack 3 in a direction obliquely, preferably perpendicular to the cutting planes 11.

It is apparent to a person skilled in the art that the various embodiments described herein can be combined within the scope of the claims and are not limited to specific examples as illustrated in the drawings. For example, an offline adjustment as explained with respect to Fig. 12 may also be combined with an additional inline adjustment as shown in Fig. 4. Further, the alignment has been shown for layers 7 extending parallel to the side faces 13, 15 of a slice 9. However, the method may as well be applied to obliquely extending light reflecting layers 7, having a defined angle with respect to the side faces 13, 15.

**List of reference signs**

| | |
|---|---|
| 1 | light-guide optical element |
| 2 | cutting device |
| 3 | compound glass stack |
| 5 | glass plate |
| 6 | bond layer |
| 7 | light reflecting layer |
| 9 | slice |
| 10 | alignment device |
| 11 | cutting plane |
| 13, 15 | side face of slice 9 |
| 16 | plane of compound glass stack |
| 17 | side face of compound glass stack 3 |
| 18 | cutting wire |
| 21 | wire saw |
| 22 | autocollimator |
| 23 | holder |
| 24 | camera |
| 25 | reference surface |
| 26 | support |
| 27 | sacrificial plate |
| 30 | test compound glass stack |
| 32, 33, 34 | stage |
| 35 | advancement device (macrostage) |
| 37 | mixer glass plate |
| 38 | dummy glass plate |
| 40 | gauge |
| 42 | fixation |
| 44 | cement |
| 46 | base plate |
| 47 | mount |
| 50 | outer glass plate |
| 180 | parallel sections of 18 |

## Claims

1. A method for fabricating blanks for light-guide optical elements (1) from a compound glass stack (3), the compound glass stack (3) comprising a multitude of glass plates (5) bonded together, wherein light reflecting layers (7) are arranged between the glass plates (5), wherein the method comprises cutting slices (9) from the compound glass stack (3) along parallel cutting planes (11), wherein the method further comprises aligning the compound glass stack (3) to the cutting planes (11) so that the light reflecting layers (7) have a defined orientation with respect to the side faces (13, 15) of the slices (9) after cutting, wherein the compound glass stack (3) has a plane (16) having a defined orientation with respect to the light reflecting layers (7) within the compound glass stack (3), so that the light reflecting layers (7) within the slices (9) are correctly oriented when the cutting planes (11) run parallel to the plane (16) of the compound glass stack (3), wherein the alignment of the compound glass stack (3) to the cutting planes (11) comprises
- adjusting the tilt angles of the plane (16) of the compound glass stack (3) with respect to the cutting planes (11) using an autocollimator (22), and
- adjusting the position of the compound glass stack (3) in a direction obliquely, preferably perpendicular to the cutting planes (11),
wherein the compound glass stack (3) is held fixed to a holder (23) in its aligned orientation and cut into slices (9), the slices (9) forming blanks for light-guide optical elements (1).

2. The method according to claim 1, wherein the compound glass stack (3) comprises a multitude of light reflecting layers (7) oriented parallel to the side face (17) of the compound glass stack (3) and wherein the step of adjusting the position of the compound glass stack (3) in a direction perpendicular to the cutting planes (11) comprises adjusting the position of the compound glass stack (3) so that the light reflecting layers (7) are centered within the slices (9) in a direction perpendicular to the side faces (13, 15).

3. The method according to one of the preceding claims, wherein the plane (16) of the compound glass stack (3) having a defined orientation with respect to the light reflecting layers (7) is a side face (17) of the compound glass stack (3).

4. The method according to one of the preceding claims, wherein the slices (9) are cut from the compound glass stack (3) using a wire saw (21) with a multitude of parallel running sections (180) of one or more cutting wires (18).

5. The method according to one of the preceding claims, **characterized in that** the step of adjusting the position of the compound glass stack (3) so that the light reflecting layers (7) are centered within the slices (9) in a direction perpendicular to the side faces (13, 15) comprises monitoring the position of at least one light reflecting layer (7) by means of a camera (24).

6. The method according to one of the preceding claims, **characterized in that** the autocollimator (22) is arranged in fixed relationship to the cutting device (2), in particular to a wire saw (21).

7. The method according to one of the preceding claims, **characterized by** an adjustment of the orientation of the autocollimator (22) with respect to the cutting planes (11), the method comprising cutting a first compound glass stack (3) to form slices (9) and subsequently cutting a second compound glass stack (3), wherein a multitude of the slices (9) cut from the first compound glass stack are placed onto a reference surface (25) with one of its side faces (13, 15), and the tilt angles of an inner surface of the slides (9), in particular of a light reflecting layer (7) with respect to the reference surface (25) are measured and average tilt angles are determined, and wherein the orientation of the autocollimator (22) is corrected based on the average tilt angles and the second compound glass stack (3) is cut with its tilt angles with respect to the cutting planes (11) being adjusted using the autocollimator (22) in its corrected orientation.

8. The method according to one of the preceding claims, the method comprising cutting a first compound glass stack (3) to form slices (9) and subsequently cutting a second compound glass stack (3), wherein a multitude of the slices (9) cut from the first compound glass stack (3) are placed onto a reference surface (25) and the tilt angles of planes (16) of the slices (9) with respect to the reference surface (25) are measured and average tilt angles are determined, and wherein the orientation of the autocollimator (22) is corrected based on the average tilt angles and the second compound glass stack (3) is cut with its tilt angles with respect to the cutting planes (11) being adjusted using the autocollimator (22) in its corrected orientation.

9. The method according to one of the preceding claims, wherein the compound glass stack (3) is bonded to a sacrificial plate (27) which is held fixed on the holder, and wherein the cutting comprises completely cutting through the compound glass stack (3) and further partly into the sacrificial plate (27), wherein after cutting, the bond between the sacrificial plate (27) and the compound glass stack (3) is released so that the slices (9) separate from the sacrificial plate (27).

10. The method according to one of the preceding claims, **characterized by** at least one of the following steps:
- the position of the compound glass stack (3) with respect to the cutting planes (11) is adjusted so that deviation of the position of a light reflective layer (7) with respect to a reference position, preferably a center position, within a slice (9) cut from the compound glass stack (3) is less than 0.2 mm, preferably less than 0.1 mm,
- the orientation of the compound glass stack (3) with respect to the cutting planes (11) is adjusted so that a tilt angle of the light reflective layer (7) of a slice (9) cut from the compound glass stack (3) is less than 15 arc seconds,
- a pre-adjustment of a tilt angle about an axis of rotation obliquely to the direction of movement for cutting the compound glass stack (3) is performed by measuring positions of a point on a face of the compound glass stack (3) along a path in the direction of movement of the compound glass stack (3) during the cutting operation, and adjusting the orientation of the compound glass stack 3 based on the measurement, in particular, adjusting the orientation so that the positions have equal values in direction perpendicular to the face
- a pre-adjustment wherein the distance of a face (17) of the compound glass stack (3) to the cutting wire (18) is measured using at least one camera (24) for at least two points on the face (17) being spaced apart along the longitudinal direction of the wire (18), wherein the orientation of the compound glass stack (3) is then adjusted so that the distances of the points to the cutting wire (18) are equal.

11. The method according to one of the preceding claims, comprising
- fixing the compound glass stack (3) on a holder (23) movable by stacked stages (32, 33, 34), and
- adjusting the azimuthal angle of rotation of the compound glass stack (3) about an axis along the cutting direction using one of the stages (32),
- adjusting or manipulating an angle of rotation of the compound glass stack (3) about an axis obliquely to the cutting planes (11) using one of the stages (33) and
- adjusting or manipulating the position of the compound glass stack (3) in a direction obliquely to the cutting planes (11) with one of the stages (34).

12. The method according to one of the preceding claims, wherein the holder (23) has a defined orientation with respect to the cutting planes (11) when the holder (23) is inserted and fixed in the cutting device (2), and wherein the compound glass stack (3) is aligned to the holder (23) while the holder (23) is detached from the cutting device (2) and fixed to the alignment device (10), the compound glass stack (3) is aligned to the holder (23), as monitored using the autocollimator (22) and fixed to the holder (23) in aligned orientation, and wherein the holder (23) with the attached compound glass stack (3) is inserted and fastened to the cutting device (2) so that the compound glass stack (3) has a defined orientation with the cutting planes due to its defined orientation to the holder (23).

13. A method of producing a light-guide optical element (1), comprising producing a slice (9) from a compound glass stack (3) using a method according to one of the preceding claims, polishing the side faces (13, 15) of the slice (9) and cutting the slice (9) along a predefined contour line to obtain a light-guide optical element (1).

14. A device for fabricating blanks for light-guide optical elements (1) from a compound glass stack (3), the compound glass stack (3) comprising a multitude of glass plates (5) bonded together, with light reflecting layers (7) being arranged between the glass plates (5), the device comprises a cutting device (2) for cutting slices (9) from the compound glass stack (3) along parallel cutting planes (11), and an alignment device (10) for aligning the compound glass stack (3) to the cutting planes (11) so that the light reflecting layers (7) have a defined orientation with respect to the side faces (13, 15) of the slices (9) after cutting, wherein the compound glass stack (3) has a plane (16) having a defined orientation with respect to the light reflecting layers (7) within the compound glass stack (3), so that the light reflecting layers (7) within the slices (9) are correctly oriented when the cutting planes (11) run parallel to the plane (16) of the compound glass stack (3), wherein the device comprises a holder (23) for holding the compound glass stack (3) in its aligned orientation, and wherein the alignment device (10) comprises
- an autocollimator (22) for monitoring adjustment of the tilt angles of the plane (16) of the compound glass stack (3) with respect to the cutting planes (11), and
- means for adjusting the position of the compound glass stack (3) in a direction obliquely, preferably perpendicular to the cutting planes (11).

## Patentansprüche

1. Verfahren zum Herstellen von Rohlingen für optische Lichtleiterelemente (1) aus einem Verbundglasstapel (3), wobei der Verbundglasstapel (3) eine Vielzahl von miteinander verbundenen Glasplatten (5) umfasst, wobei lichtreflektierende Schichten (7) zwischen den Glasplatten (5) angeordnet sind, wobei das Verfahren Schneiden von Scheiben (9) aus dem Verbundglasstapel (3) entlang paralleler Schnittebenen (11) umfasst, wobei das Verfahren ferner Ausrichten des Verbundglasstapels (3) auf die Schnittebenen (11) umfasst, so dass die lichtreflektierenden Schichten (7) eine definierte Orientierung in Bezug auf die Seitenflächen (13, 15) der Scheiben (9) nach dem Schneiden aufweisen, wobei der Verbundglasstapel (3) eine Ebene (16) mit einer definierten Orientierung in Bezug auf die lichtreflektierenden Schichten (7) innerhalb des Verbundglasstapels (3) aufweist, damit die lichtreflektierenden Schichten (7) innerhalb der Scheiben (9) korrekt ausgerichtet sind, wenn die Schnittebenen (11) parallel zur Ebene (16) des Verbundglasstapels (3) verlaufen, wobei die Ausrichtung des Verbundglasstapels (3) zu den Schnittebenen (11) Folgendes umfasst
- Einstellen der Neigungswinkel der Ebene (16) des Verbundglasstapels (3) in Bezug auf die Schnittebenen (11) mit einem Autokollimator (22), und
- Einstellen der Position des Verbundglasstapels (3) in einer Richtung schräg, vorzugsweise senkrecht zu den Schnittebenen (11),
wobei der Verbundglasstapel (3) in seiner ausgerichteten Orientierung an einem Halter (23) fixiert gehalten und in Scheiben (9) geschnitten wird, wobei die Scheiben (9) Rohlinge für optische Lichtleiterelemente (1) bilden.

2. Verfahren nach Anspruch 1, wobei der Verbundglasstapel (3) eine Vielzahl von lichtreflektierenden Schichten (7) umfasst, die parallel zu der Seitenfläche (17) des Verbundglasstapels (3) ausgerichtet sind, und wobei der Schritt des Einstellens der Position des Verbundglasstapels (3) in einer Richtung senkrecht zu den Schnittebenen (11) das Einstellen der Position des Verbundglasstapels (3) umfasst, sodass die lichtreflektierenden Schichten (7) innerhalb der Scheiben (9) in einer Richtung senkrecht zu den Seitenflächen zentriert sind.

3. Verfahren nach einem der vorhergehenden Ansprüche, wobei die Ebene (16) des Verbundglasstapels (3) mit einer definierten Orientierung in Bezug auf die lichtreflektierenden Schichten (7) eine Seitenfläche (17) des Verbundglasstapels (3) ist.

4. Verfahren nach einem der vorhergehenden Ansprüche, wobei die Scheiben (9) unter Verwendung einer Drahtsäge (21) mit einer Vielzahl von parallel verlaufenden Abschnitten (180) eines oder mehrerer Schneiddrähte (18) aus dem Verbundglasstapel (3) geschnitten werden.

5. Verfahren nach einem der vorhergehenden Ansprüche, **dadurch gekennzeichnet, dass** der Schritt des Einstellens der Position des Verbundglasstapels (3), sodass die lichtreflektierenden Schichten (7) innerhalb der Scheiben (9) in einer Richtung senkrecht zu den Seitenflächen (13, 15) zentriert sind, das Überwachen der Position mindestens einer lichtreflektierenden Schicht (7) mittels einer Kamera (24) umfasst.

6. Verfahren nach einem der vorhergehenden Ansprüche, **dadurch gekennzeichnet, dass** der Autokollimator (22) in einer festen Beziehung zu der Schneideinrichtung (2), insbesondere zu einer Drahtsäge (21), angeordnet ist.

7. Verfahren nach einem der vorhergehenden Ansprüche, **gekennzeichnet durch** eine Einstellung der Orientierung des Autokollimators (22) in Bezug auf die Schnittebenen (11), wobei das Verfahren Schneiden eines ersten Verbundglasstapels (3) zum Bilden von Scheiben (9) und anschließendes Schneiden eines zweiten Verbundglasstapels (3) umfasst, wobei eine Vielzahl der Scheiben (9), die aus dem ersten Verbundglasstapel geschnitten werden, mit einer ihrer Seitenflächen (13, 15) auf eine Referenzfläche (25) platziert werden, und die Neigungswinkel einer Innenfläche der Scheiben (9), insbesondere einer lichtreflektierenden Schicht (7) bezüglich der Referenzfläche (25) gemessen werden und durchschnittliche Neigungswinkel bestimmt werden, und wobei die Orientierung des Autokollimators (22) basierend auf den durchschnittlichen Neigungswinkeln korrigiert wird und der zweite Verbundglasstapel (3) geschnitten wird, wobei seine Neigungswinkel in Bezug auf die Schnittebenen (11) unter Verwendung des Autokollimators (22) in seiner korrigierten Orientierung eingestellt werden.

8. Verfahren nach einem der vorhergehenden Ansprüche, wobei das Verfahren Schneiden eines ersten Verbundglasstapels (3) zum Bilden von Scheiben (9) und anschließendes Schneiden eines zweiten Verbundglasstapels (3) umfasst, wobei eine Vielzahl der Scheiben (9), die aus dem ersten Verbundglasstapel (3) geschnitten werden, auf eine Referenzfläche (25) platziert werden und die Neigungswinkel von Ebenen (16) der Scheiben (9) in Bezug auf die Referenzfläche (25) gemessen und durchschnittliche Neigungswinkel bestimmt werden, und wobei die Orientierung des Autokollimators (22) basierend auf den durchschnittlichen Neigungswinkeln korrigiert wird und der zweite Verbundglasstapel (3) geschnitten wird, wobei seine Neigungswinkel in Bezug auf die Schnittebenen (11) unter Verwendung des Autokollimators (22) in seiner korrigierten Orientierung eingestellt werden.

9. Verfahren nach einem der vorhergehenden Ansprüche, wobei der Verbundglasstapel (3) mit einer Opferplatte (27) verbunden wird, die an dem Halter fixiert gehalten wird, und wobei das Schneiden ein vollständiges Schneiden durch den Verbundglasstapel (3) und ferner teilweises Schneiden in die Opferplatte (27) umfasst, wobei nach dem Schneiden die Verbindung zwischen der Opferplatte (27) und dem Verbundglasstapel (3) gelöst wird, so dass sich die Scheiben (9) von der Opferplatte (27) trennen.

10. Verfahren nach einer der vorhergehenden Ansprüche, **gekennzeichnet durch** mindestens einen der folgenden Schritte:
- die Position des Verbundglasstapels (3) in Bezug auf die Schnittebenen (11) wird so eingestellt, dass die Abweichung der Position einer lichtreflektierenden Schicht (7) in Bezug auf eine Referenzposition, vorzugsweise eine mittlere Position, innerhalb einer aus dem Verbundglasstapel (3) geschnittenen Scheibe (9) weniger als 0,2 mm, vorzugsweise weniger als 0,1 mm beträgt,
- die Orientierung des Verbundglasstapels (3) in Bezug auf die Schnittebenen (11) wird so eingestellt, dass ein Neigungswinkel der lichtreflektierenden Schicht (7) einer aus dem Verbundglasstapel (3) geschnittenen Scheibe (9) weniger als 15 Bogensekunden beträgt,
- eine Voreinstellung eines Neigungswinkels um eine Drehachse schräg zur Bewegungsrichtung zum Schneiden des Verbundglasstapels (3) wird durch Messen von Positionen eines Punkts auf einer Fläche des Verbundglasstapels (3) entlang eines Pfads in Bewegungsrichtung des Verbundglasstapels (3) während des Schneidvorgangs durchgeführt, und Einstellen der Orientierung des Verbundglasstapels 3 basierend auf der Messung, insbesondere Einstellen der Orientierung, so dass die Positionen gleiche Werte in Richtung senkrecht zur Fläche aufweisen
- eine Voreinstellung, bei der der Abstand einer Fläche (17) des Verbundglasstapels (3) zum Schneiddraht (18) unter Verwendung mindestens einer Kamera (24) für mindestens zwei entlang der Längsrichtung des Drahtes (18) beabstandete Punkte auf der Fläche (17) gemessen wird, wobei die Orientierung des Verbundglasstapels (3) dann so eingestellt wird, dass die Abstände der Punkte zum Schneiddraht (18) gleich sind.

11. Verfahren nach einem der vorhergehenden Ansprüche, umfassend
- Befestigen des Verbundglasstapels (3) an einem Halter (23), der durch gestapelte Stufen (32, 33, 34) bewegbar ist, und
- Einstellen des azimutalen Drehwinkels des Verbundglasstapels (3) um eine Achse entlang der Schnittrichtung unter Verwendung einer der Stufen (32),
- Einstellen oder Manipulieren eines Drehwinkels des Verbundglasstapels (3) um eine Achse schräg zu den Schnittebenen (11) unter Verwendung einer der Stufen (33) und
- Einstellen oder Manipulieren der Position des Verbundglasstapels (3) in einer Richtung schräg zu den Schnittebenen (11) mit einer der Stufen (34).

12. Verfahren nach einem der vorhergehenden Ansprüche, wobei der Halter (23) eine definierte Orientierung bezüglich der Schnittebenen (11) aufweist, wenn der Halter (23) in der Schneidvorrichtung (2) eingesetzt und fixiert ist, und wobei der Verbundglasstapel (3) auf den Halter (23) ausgerichtet wird, während der Halter (23) von der Schneidvorrichtung (2) gelöst und an der Ausrichtungsvorrichtung (10) befestigt ist, wobei der Verbundglasstapel (3) auf den Halter (23) ausgerichtet wird, wie unter Verwendung des Autokollimators (22) überwacht, und in ausgerichteter Orientierung an dem Halter (23) befestigt wird, und wobei der Halter (23) mit dem befestigten Verbundglasstapel (3) so eingesetzt und an der Schneidvorrichtung (2) befestigt wird, dass der Verbundglasstapel (3) aufgrund seiner definierten Orientierung zum Halter (23) eine definierte Orientierung mit den Schnittebenen aufweist.

13. Verfahren zum Herstellen eines optischen Lichtleiterelements (1), umfassend Herstellen einer Scheibe (9) aus einem Verbundglasstapel (3) unter Verwendung eines Verfahrens nach einem der vorhergehenden Ansprüche, Polieren der Seitenflächen (13, 15) der Scheibe (9) und Schneiden der Scheibe (9) entlang einer vordefinierten Konturlinie, um ein optisches Lichtleiterelement (1) zu erhalten.

14. Vorrichtung zum Herstellen von Rohlingen für optische Lichtleiterelemente (1) aus einem Verbundglasstapel (3), wobei der Verbundglasstapel (3) eine Vielzahl von miteinander verbundenen Glasplatten (5) umfasst, wobei zwischen den Glasplatten (5) lichtreflektierende Schichten (7) angeordnet sind, wobei die Vorrichtung eine Schneidvorrichtung (2) zum Schneiden von Scheiben (9) aus dem Verbundglasstapel (3) entlang paralleler Schnittebenen (11) und eine Ausrichtungsvorrichtung (10) zum Ausrichten des Verbundglasstapels (3) auf die Schnittebenen (11), so dass die lichtreflektierenden Schichten (7) eine definierte Orientierung in Bezug auf die Seitenflächen (13, 15) der Scheiben (9) nach dem Schneiden aufweisen, umfasst, wobei der Verbundglasstapel (3) eine Ebene (16) mit einer definierten Orientierung in Bezug auf die lichtreflektierenden Schichten (7) innerhalb des Verbundglasstapels (3) aufweist, so dass die lichtreflektierenden Schichten (7) innerhalb der Scheiben (9) korrekt ausgerichtet sind, wenn die Schnittebenen (11) parallel zur Ebene (16) des Verbundglasstapels (3) verlaufen, wobei die Vorrichtung einen Halter (23) zum Halten des Verbundglasstapels (3) in seiner ausgerichteten Orientierung umfasst und wobei die Ausrichtungsvorrichtung (10) Folgendes umfasst
- einen Autokollimator (22) zur Überwachung der Einstellung der Neigungswinkel der Ebene (16) des Verbundglasstapels (3) in Bezug auf die Schnittebenen (11), und
- Mittel zum Einstellen der Position des Verbundglasstapels (3) in einer Richtung schräg, vorzugsweise senkrecht zu den Schnittebenen (11).

## Revendications

1. Procédé de fabrication d'ébauches pour éléments optiques de guide de lumière (1) à partir d'un empilement de verre composite (3), l'empilement de verre composite (3) comprenant une multitude de plaques de verre (5) liées entre elles, des couches réfléchissant la lumière (7) étant disposées entre les plaques de verre (5), le procédé comprenant le fait de découper des tranches (9) dans l'empilement de verre composite (3) le long de plans de coupe (11) parallèles, le procédé comprenant en outre le fait d'aligner l'empilement de verre composite (3) relativement aux plans de coupe (11) de sorte que les couches réfléchissant la lumière (7) aient une orientation définie par rapport aux faces latérales (13, 15) des tranches (9) après la découpe, l'empilement de verre composite (3) ayant un plan (16) ayant une orientation définie par rapport aux couches réfléchissant la lumière (7) dans l'empilement de verre composite (3), de sorte que les couches réfléchissant la lumière (7) à l'intérieur des tranches (9) soient orientées correctement lorsque les plans de coupe (11) s'étendent parallèlement au plan (16) de l'empilement de verre composite (3), l'alignement de l'empilement de verre composite (3) relativement aux plans de coupe (11) comprenant
- ajuster les angles d'inclinaison du plan (16) de l'empilement de verre composite (3) par rapport aux plans de coupe (11) à l'aide d'un autocollimateur (22), et
- ajuster la position de l'empilement de verre composite (3) dans une direction oblique, de préférence perpendiculaire aux plans de coupe (11),
l'empilement de verre composite (3) étant maintenu fixé à un support (23) dans son orientation alignée et découpé en tranches (9), les tranches (9) formant des ébauches pour des éléments optiques de guide de lumière (1).

2. Procédé selon la revendication 1, dans lequel l'empilement de verre composite (3) comprend une multitude de couches réfléchissant la lumière (7) orientées parallèlement à la face latérale (17) de l'empilement de verre composite (3) et dans lequel l'étape consistant à ajuster la position de l'empilement de verre composite (3) dans une direction perpendiculaire aux plans de coupe (11) comprend le fait d'ajuster la position de l'empilement de verre composite (3) de sorte que les couches réfléchissant la lumière (7) soient centrées dans les tranches (9) dans une direction perpendiculaire aux faces latérales (13, 15).

3. Procédé selon l'une des revendications précédentes, dans lequel le plan (16) de l'empilement de verre composite (3) ayant une orientation définie par rapport aux couches réfléchissant la lumière (7) est une face latérale (17) de l'empilement de verre composite (3).

4. Procédé selon l'une des revendications précédentes, dans lequel les tranches (9) sont découpées dans l'empilement de verre composite (3) à l'aide d'une scie à fil (21) avec une pluralité de sections parallèles (180) d'un ou de plusieurs fils de coupe (18).

5. Procédé selon l'une des revendications précédentes, **caractérisé en ce que** l'étape consistant à ajuster la position de l'empilement de verre composite (3) de sorte que les couches réfléchissant la lumière (7) soient centrées dans les tranches (9) dans une direction perpendiculaire aux faces latérales (13, 15) comprend le fait de surveiller la position d'au moins une couche réfléchissant la lumière (7) au moyen d'une caméra (24).

6. Procédé selon l'une des revendications précédentes, **caractérisé en ce que** l'autocollimateur (22) est disposé de manière fixe par rapport au dispositif de coupe (2), en particulier par rapport à une scie à fil (21).

7. Procédé selon l'une des revendications précédentes, **caractérisé par** un ajustement de l'orientation de l'autocollimateur (22) par rapport aux plans de coupe (11), le procédé comprenant le fait de découper un premier empilement de verre composite (3) pour former des tranches (9) et le fait de découper ensuite un deuxième empilement de verre composite (3), une pluralité des tranches (9) découpées dans le premier empilement de verre composite étant placées sur une surface de référence (25) avec l'une de ses faces latérales (13, 15), et les angles d'inclinaison d'une surface intérieure des tranches (9), en particulier d'une couche réfléchissant la lumière (7), par rapport à la surface de référence (25) étant mesurés et des angles d'inclinaison moyens étant déterminés, et l'orientation de l'autocollimateur (22) étant corrigée sur la base des angles d'inclinaison moyens et le deuxième empilement de verre composite (3) étant découpé avec ses angles d'inclinaison par rapport aux plans de coupe (11) ajustés au moyen de l'autocollimateur (22) dans son orientation corrigée.

8. Procédé selon l'une des revendications précédentes, le procédé comprenant le fait de découper un premier empilement de verre composite (3) pour former des tranches (9) et le fait de découper ensuite un deuxième empilement de verre composite (3), une pluralité des tranches (9) découpées dans le premier empilement de verre composite (3) étant placées sur une surface de référence (25) et les angles d'inclinaison de plans (16) des tranches (9) par rapport à la surface de référence (25) étant mesurés et des angles d'inclinaison moyens étant déterminés, et l'orientation de l'autocollimateur (22) étant corrigée sur la base des angles d'inclinaison moyens et le deuxième empilement de verre composite (3) étant découpé avec ses angles d'inclinaison par rapport aux plans de coupe (11) ajustés au moyen de l'autocollimateur (22) dans son orientation corrigée.

9. Procédé selon l'une des revendications précédentes, dans lequel l'empilement de verre composite (3) est lié à une plaque sacrificielle (27) qui est maintenue fixée sur le support, et dans lequel la découpe comprend le fait de couper en traversant complètement l'empilement de verre composite (3) et en outre en traversant partiellement dans la plaque sacrificielle (27), la liaison entre la plaque sacrificielle (27) et l'empilement de verre composite (3) étant rompue après la découpe, de sorte que les tranches (9) se séparent de la plaque sacrificielle (27).

10. Procédé selon l'une des revendications précédentes, **caractérisé par** au moins une des étapes suivantes :
- la position de l'empilement de verre composite (3) par rapport aux plans de coupe (11) est ajustée de telle sorte que l'écart de la position d'une couche réfléchissant la lumière (7) par rapport à une position de référence, de préférence une position centrale, à l'intérieur d'une tranche (9) découpée dans l'empilement de verre composite (3) soit inférieur à 0,2 mm, de préférence inférieur à 0,1 mm,
- l'orientation de l'empilement de verre composite (3) par rapport aux plans de coupe (11) est ajustée de telle sorte qu'un angle d'inclinaison de la couche réfléchissant la lumière (7) d'une tranche (9) découpée dans l'empilement de verre composite (3) soit inférieur à 15 secondes d'arc,
- un préajustement d'un angle d'inclinaison autour d'un axe de rotation obliquement par rapport à la direction de déplacement pour la découpe de l'empilement de verre composite (3) est effectué en mesurant des positions d'un point sur une face de l'empilement de verre composite (3) le long d'un trajet dans la direction de déplacement de l'empilement de verre composite (3) pendant l'opération de découpe, et en ajustant l'orientation de l'empilement de verre composite 3 en fonction de la mesure, en particulier en ajustant l'orientation pour que les positions aient des valeurs égales dans la direction perpendiculaire à la face
- un pré-ajustement dans lequel la distance entre une face (17) de l'empilement de verre composite (3) et le fil de coupe (18) est mesurée à l'aide d'au moins une caméra (24) pour au moins deux points sur la face (17) mutuellement espacés le long de la direction longitudinale du fil (18), l'orientation de l'empilement de verre composite (3) étant ensuite ajustée de sorte que les distances entre les points et le fil de coupe (18) soient égales.

11. Procédé selon l'une des revendications précédentes, comprenant
- fixer l'empilement de verre composite (3) sur un support (23) déplaçable par des étages empilés (32, 33, 34), et
- ajuster l'angle azimutal de rotation de l'empilement de verre composite (3) autour d'un axe le long de la direction de coupe à l'aide d'un des étages (32),
- ajuster ou manipuler un angle de rotation de l'empilement de verre composite (3) autour d'un axe obliquement par rapport aux plans de coupe (11) à l'aide d'un des étages (33) et
- ajuster ou manipuler la position de l'empilement de verre composite (3) dans une direction oblique par rapport aux plans de coupe (11) avec l'un des étages (34).

12. Procédé selon l'une des revendications précédentes, dans lequel le support (23) présente une orientation définie par rapport aux plans de coupe (11) lorsque le support (23) est inséré et fixé dans le dispositif de coupe (2), et dans lequel l'empilement de verre composite (3) est aligné relativement au support (23) tandis que le support (23) est détaché du dispositif de coupe (2) et fixé sur le dispositif d'alignement (10), l'empilement de verre composite (3) est aligné relativement au support (23), ceci étant contrôlé au moyen de l'autocollimateur (22), et fixé au support (23) dans une orientation alignée, et dans lequel le support (23) avec l'empilement de verre composite (3) attaché est inséré et fixé dans le dispositif de coupe (2) de sorte que l'empilement de verre composite (3) présente une orientation définie avec les plans de coupe en raison de son orientation définie par rapport au support (23).

13. Procédé de production d'un élément optique de guide de lumière (1), comprenant la production d'une tranche (9) à partir d'un empilement de verre composite (3) en utilisant un procédé selon l'une des revendications précédentes, le polissage des faces latérales (13, 15) de la tranche (9) et la découpe de la tranche (9) le long d'une ligne de contour prédéfinie pour obtenir un élément optique de guide de lumière (1).

14. Dispositif de fabrication d'ébauches pour éléments optiques de guide de lumière (1) à partir d'un empilement de verre composite (3), l'empilement de verre composite (3) comprenant une multitude de plaques de verre (5) liées entre elles, des couches réfléchissant la lumière (7) étant disposées entre les plaques de verre (5), le dispositif comprenant un dispositif de coupe (2) pour découper des tranches (9) dans l'empilement de verre composite (3) le long de plans de coupe (11) parallèles, et un dispositif d'alignement (10) pour aligner l'empilement de verre composite (3) relativement aux plans de coupe (11) de sorte que les couches réfléchissant la lumière (7) aient une orientation définie par rapport aux faces latérales (13, 15) des tranches (9) après la découpe, l'empilement de verre composite (3) ayant un plan (16) ayant une orientation définie par rapport aux couches réfléchissant la lumière (7) dans l'empilement de verre composite (3), de sorte que les couches réfléchissant la lumière (7) à l'intérieur des tranches (9) soient orientées correctement lorsque les plans de coupe (11) s'étendent parallèlement au plan (16) de l'empilement de verre composite (3), le dispositif comprenant un support (23) pour supporter l'empilement de verre composite (3) dans son orientation alignée, et le dispositif d'alignement (10) comprenant
- un autocollimateur (22) pour surveiller l'ajustement des angles d'inclinaison du plan (16) de l'empilement de verre composite (3) par rapport aux plans de coupe (11), et
- des moyens d'ajustement de la position de l'empilement de verre composite (3) dans une direction oblique, de préférence perpendiculaire aux plans de coupe (11).
